# EUROPÄISCHE PATENTSCHRIFT

(11) **EP 3 729 616 B1**
(45) Veröffentlichungstag und Bekanntmachung des Hinweises auf die Patenterteilung: **16.06.2021**
(21) Anmeldenummer: 18793650.5
(22) Anmeldetag: 26.10.2018
(51) Int. Cl.: H01R 39/46, H02K 19/26, H02K 13/14, H02K 11/028

(54) **ANORDNUNG ZUR ELEKTRISCHEN ERREGUNG DES ROTORS EINER ELEKTRISCHEN MASCHINE UND VERFAHREN ZUM BETRIEB**
ASSEMBLY FOR ELECTRICALLY EXCITING THE ROTOR OF AN ELECTRICAL MACHINE, AND METHOD FOR OPERATION
DISPOSITIF POUR L'EXCITATION ÉLECTRIQUE DU ROTOR D'UNE MACHINE ÉLECTRIQUE ET PROCÉDÉ POUR LE FAIRE FONCTIONNER

(30) Priorität: 22.12.2017 DE 102017131050
(43) Veröffentlichungstag der Anmeldung: 28.10.2020
(73) Patentinhaber: Voith Patent GmbH, 89522 Heidenheim (DE)
(72) Erfinder: HILDINGER, Thomas, 06543-150 Santana (BR)
(74) Vertreter: Voith Patent GmbH - Patentabteilung
(86) Internationale Anmeldenummer: PCT/EP2018/079387
(87) Internationale Veröffentlichungsnummer: WO 2019/120707

(56) Entgegenhaltungen:
- EP-A1- 1 885 034
- DE-A1- 19 737 578
- DE-A1-102012 206 863

## Beschreibung

Die vorliegende Erfindung betrifft eine Anordnung zur elektrischen Erregung des Rotors einer elektrischen Maschine und ein Verfahren zum Betrieb einer solchen elektrischen Maschine. Die vorliegende Erfindung betrifft elektrische Maschinen, welche mit Gleichstrom erregt werden.

Bei vielen elektrischen Maschinen erfolgt die elektrische Erregung des Rotors über Schleifkontakte. Bei den Schleifkontakten kann es sich um Kohlebürsten handeln, die auf Schleifringe aufgesetzt werden. Über die so gebildeten Schleifkontakte wird der für den Betrieb der elektrischen Maschine im Läufer benötigte Strom eingespeist.

Während des Betriebs der elektrischen Maschine unterliegen die Schleifkontaktelemente einem mehr oder weniger starken Verschleiß. Sind ein oder mehrere der Schleifkontaktelemente verschlissen, so wird eine Service-Maßnahme notwendig, bei der es zu kostenträchtigen Stillstandzeiten kommt. Um den Ausfall der elektrischen Maschine aufgrund dieser Ursache möglichst lange hinauszuzögern, wurden im Stand der Technik verschiedene Maßnahmen vorgeschlagen. Es sei hierzu beispielhaft auf die DE 10 2006 040 262 B3 und die EP 1 885 034 A1 verwiesen.

Eine Ursache für einen erhöhten Verschleiß der Kontaktelemente ist darin zu suchen, dass die Stromdichte durch die Kontaktelemente einen bestimmten Wert überschreitet (vgl. z.B. die DE 10 2006 040 262 B3). Die Erfinder haben jedoch erkannt, dass es auch dann zu einem erhöhten Verschleiß der Kontaktelemente kommt, wenn die Stromdichte durch die Kontaktelemente einen bestimmten Wert unterschreitet. Der Stromfluss durch die bekannten und vielfach eingesetzten Kohlebürsten führt ab einer gewissen Stromdichte zu einer Schmierwirkung, welche den Abrieb verringert. Die Kontaktelemente beispielsweise von einem Synchrongenerator werden in der Regel so ausgelegt, dass der Verschleiß bei Nennlast möglichst gering ist, d.h. bei Nennlast bewegt sich die Stromdichte durch die Kontaktelement im für den Verschleiß günstigen Bereich. Es gibt aber bestimmte Betriebsbedingungen, bei denen gleichstromerregte elektrische Maschinen mit geringen Stromdichten in den Kontaktelementen über längere Zeit betrieben werden. Dazu gehört z.B. eine Synchronmaschine, die im Phasenschiebermodus betrieben wird (vgl. beispielsweise die DE 10 2015 111 394 A1). Je nachdem welche Blindleistungsaufnahme gerade notwendig ist, wird eine solche Synchronmaschine entweder unter- oder übererregt betrieben.

Der Erfinder hat sich die Aufgabe gestellt, den Verschleiß der Kontaktelemente von gleichstromerregten elektrischen Maschinen herabzusetzen, wenn die Stromdichte durch die Kontaktelemente aus dem günstigen Bereich in Richtung von kleinen Stromdichten herausläuft. Gemäß der erfindungsgemäßen Lösung wird die Abnutzung der Schleifkontakte in Betriebsbedingungen mit geringer Stromdichte in den Schleifkontakten durch eine zusätzliche Einspeisung eines dem Gleichstrom überlagerten Wechselstroms verringert, wobei die Rotorpole gegenüber dem Wechselstrom durch einen mitrotierenden Kondensator als offener Kreis wirken, d.h. der Wechselstrom fließt nicht durch die Rotorpole. Man könnte auch sagen, dass die Rotorpole durch den Kondensator gegenüber dem Wechselstrom kurzgeschlossen werden.

Die gestellte Aufgabe wird durch eine Anordnung mit den Merkmalen des Anspruchs 1 gelöst. Die gestellte Aufgabe wird weiter mit einem Verfahren zum Betrieb einer solchen Anordnung mit den Merkmalen des Anspruchs 2 gelöst.

Die erfindungsgemäße Lösung wird nachfolgend anhand von Figuren erläutert. Darin ist im Einzelnen folgendes dargestellt:
- Figur 1: Anordnung zur elektrischen Erregung des Rotors einer elektrischen Maschine gemäß dem Stand der Technik;
- Figur 2: Erfindungsgemäße Anordnung zur elektrischen Erregung des Rotors einer elektrischen Maschine;
- Figur 3: Ablaufdiagramm des erfindungsgemäßen Verfahrens.

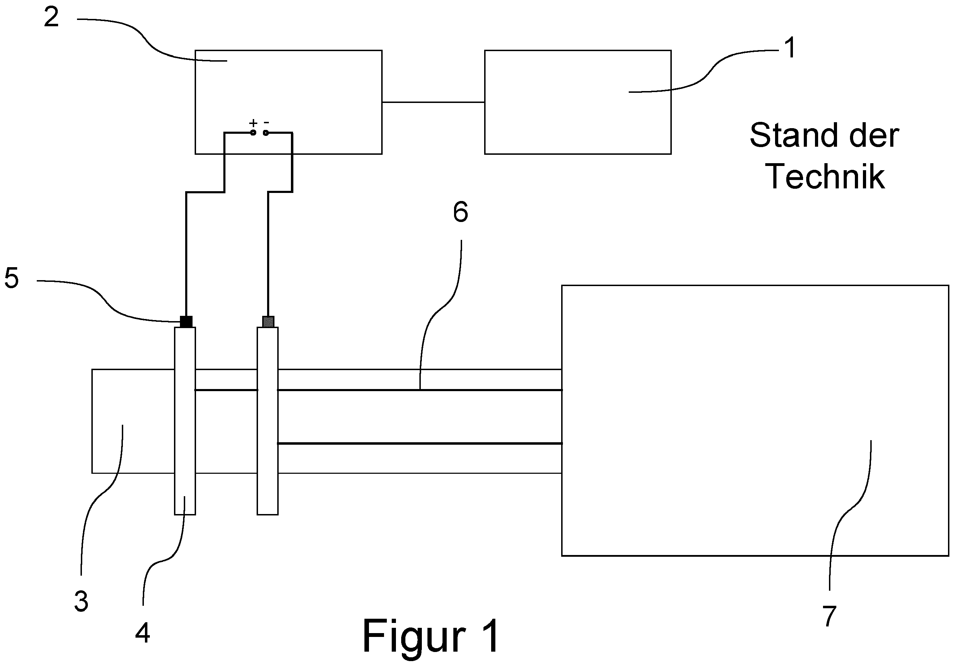

Figur 1 zeigt in stark schematischer Darstellung eine Anordnung zur elektrischen Erregung des Rotors einer elektrischen Maschine gemäß dem Stand der Technik mit Gleichstrom. Dabei umfasst der Rotor einen Rotorkörper, welcher mit 7 bezeichnet ist und welcher die elektrischen Rotorpole umfasst. Der Rotor umfasst ferner eine Welle, welche mit 3 bezeichnet ist und welche die Schleifringe trägt, von denen einer mit 4 bezeichnet ist. Zur elektrischen Speisung der Rotorpole umfasst die Anordnung eine Spannungsquelle, welche mit 2 bezeichnet ist und welche eine Gleichspannung zur Verfügung stellt. Die Anordnung umfasst ferner Kontaktelemente zur Kontaktierung der Schleifringe, von denen eines mit 5 bezeichnet ist. Auf der Welle 3 befinden sich elektrische Leiter, welche die Schleifringe 4 mit den Rotorpolen verbinden und von denen einer mit 6 bezeichnet ist. Die Spannungsquelle 2 ist mit den Kontaktelementen verbunden 5. Dabei sind die Spannungsquelle 2, die elektrische Verbindung mit den Kontaktelementen 5 und die Leiter 6 auf der Welle so angeordnet, dass ein Gleichstrom durch einen so gebildeten Erregerstromkreis fließen kann, um die Rotorpole zu erregen. Die elektrische Maschine umfasst ferner eine Steuerung, welche mit 1 bezeichnet und so ausgebildet und mit der Spannungsquelle 2 verbunden ist, dass sie dieselbe steuern kann. Es ist klar, dass wenigstens zwei Schleifringe (4) und zwei Kontaktelemente (5) benötigt werden.

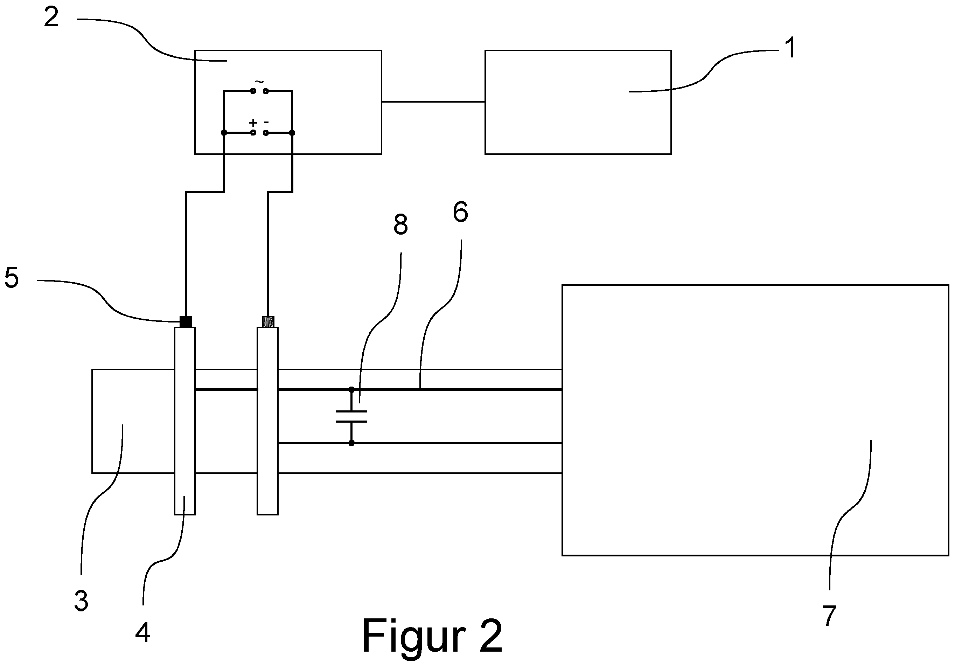

Figur 2 zeigt in stark schematischer Darstellung eine erfindungsgemäße Anordnung zur elektrischen Erregung des Rotors einer elektrischen Maschine. Die Bezeichnungen von Figur 2 entsprechen den Bezeichnungen von Figur 1. Im Unterschied zu Figur 1 kann die Spannungsquelle 2 aus Figur 2 eine Spannung zur Verfügung stellen, welche sowohl einen Gleichspannungsanteil als auch einen Wechselspannungsanteil umfasst. Bede Anteile überlagen sich. Dies ist durch die parallel geschalteten Spannungsquellensymbole für Gleich- und Wechselspannung angedeutet. Die Figur 2 sagt dabei nichts über die tatsächliche Realisierung der Spannungsquelle 2 aus. Dem Fachmann sind die hierzu geeigneten verschiedenen Ausführungsmöglichkeiten hinlänglich bekannt. Die Steuerung 1 ist dabei so ausgebildet und mit der Spannungsquelle 2 verbunden, dass sie den Gleich- und Wechselspannungsanteil derselben jeweils unabhängig voneinander einstellen kann. Äquivalent könnten natürlich auch zwei separate ansteuerbare Spannungsquellen verwendet werden, die jeweils den Gleich- und den Wechselspannungsanteil zur Verfügung stellen und entsprechend zusammengeschaltet sind. Im Rahmen der Erfindung würde eine solche Anordnung als eine Spannungsquelle 2 aufgefasst werden. Außerdem umfasst der Rotor einen Kondensator, welcher mit 8 bezeichnet ist und im auf dem Rotor liegenden Stromkreis zur Speisung der Rotorpole so angeordnet und ausgestaltet ist, dass er die Rotorpole bezüglich des Wechselspannungsanteils der Spannungsquelle 2 als offener Kreis wirken lässt. Dadurch wird gewährleistet, dass durch die Kontaktelemente 5 ein Strom fließen kann, der eine Gleich- und Wechselstromkomponente umfasst, die Rotorpole jedoch nur von einem Gleichstrom durchflossen werden, bzw. der durch die Rotorpole fließende Strom einen Wechselstromanteil aufweist, welcher gegenüber dem Gleichstromanteil vernachlässigbar klein ist. Wie der Fachmann den Kondensator 8 hierzu auszulegen hat, wird weiter unten klar werden.

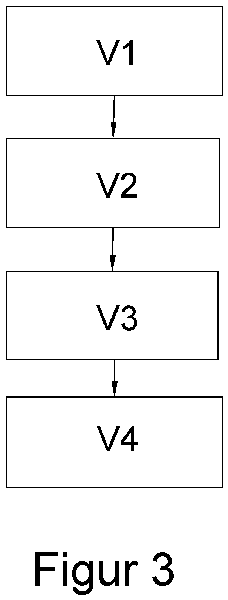

Figur 3 zeigt das Ablaufdiagramm des erfindungsgemäßen Verfahrens zum Betrieb einer erfindungsgemäßen Anordnung gemäß Figur 2. Die einzelnen Verfahrensschritte sind mit V1 bis V4 bezeichnet. Die Verfahrensschritte beinhalten folgende Tätigkeiten in der angegebenen Reihenfolge:
V1: Festlegung des Betriebszustands für die elektrische Maschine;
V2: Auswahl des benötigten Gleichspannungsanteils;
V3: Auswahl des benötigten Wechselspannungsanteils;
V4: Ansteuerung der Spannungsquelle 2 gemäß den in V2 und V3 ausgewählten Spannungsanteilen.

Im Schritt V1 wird der Betriebszustand für die elektrische Maschine festgelegt. Dies kann durch eine externe Anforderung an die Steuerung 1 erfolgen oder aber durch die Steuerung 1 selbst. In Schritt V2 wählt die Steuerung 1 den für den in V1 festgelegten Betriebszustand benötigten Gleichspannungsanteil der Spannungsquelle 2 aus. In Schritt V3 wählt die Steuerung 1 den Wechselspannungsanteil der Spannungsquelle 2 aus. Die Auswahl in V3 erfolgt dabei gemäß folgenden Kriterien. Aus dem in V2 gewählten Gleichspannungsanteil ergibt sich der Gleichstromanteil der Stromdichte, welche durch die Kontaktelemente 5 fließt. Überschreitet die Gleichstromdichte in den Kontaktelementen 5 dabei einen vordefinierten Wert, so wird kein Wechselspannungsanteil benötigt, da der Gleichstromanteil allein ausreichend ist, um die Stromdichte in den Kontaktelementen 5 über die untere Schwelle des Bereichs zu heben, in dem der Verschleiß der Kontaktelemente akzeptabel ist, d.h. in dem die Schmierwirkung ausreichend ist. Unterschreitet die Gleichstromdichte jedoch den genannten vordefinierten Wert, so wird ein Wechselspannungsanteil zur Erzielung einer ausreichenden Schmierwirkung benötigt. Die Schmierwirkung resultiert dabei aus der Erwärmung der Kontaktelemente 5 durch den Stromfluss durch dieselben. Unterschreitet die Gleichstromdichte den vordefinierten Wert also um Delta_i_gleich, so wird eine Wechselstromdichte mit einem Effektivwert von mindestens i_wechsel_eff ≥ Delta_i_gleich benötigt, um eine akzeptable Schmierwirkung zu erzielen. Es ist klar, dass der genannte vordefinierte Wert vom Material und Geometrie der verwendeten Kontaktelemente 5 abhängt. Dem Fachmann ist jedoch hinreichend klar, wie er diesen vordefinierten Wert festlegen kann. Ggf. kann der Fachmann diesen Wert auch experimentell bestimmen, indem er den Verschleiß der Kontaktelemente 5 in Abhängigkeit von der Gleichstromdichte misst. Der gesuchte Wert ergibt sich dann aus dem gemessenen Verschleiß und der gewünschten minimalen Lebensdauer der Kontaktelemente. In Schritt V4 steuert die Steuerung 1 die Spannungsquelle 2 gemäß den in den Schritten V2 und V3 ausgewählten Gleich- und Wechselspannungsanteilen an.

Die Auslegung des Kondensators 8 hängt von der Frequenz f des Wechselspannungsanteils der Spannungsquelle 2 und der Induktivität L der Rotorpole ab. Damit der unerwünschte Wechselstromanteil durch die Rotorpole vernachlässigbar klein wird, muss die Kapazität C des Kondensators 8 folgende Bedingung erfüllen: (4π² * f² * C * L) >> 1. Diese Bedingung kann also durch eine hinreichend große Frequenz f und/oder durch eine hinreichend große Kapazität C des Kondensators 8 erreicht werden. Da der Kondensator 8 mit dem Rotor mitrotiert, wird man bestrebt sein, den Kondensator nicht zu groß auszulegen. Andererseits ist es am einfachsten für f die Netzfrequenz zu wählen, da so die Spannungsquelle 2 vereinfacht ausgelegt werden kann. Je nach den vorliegenden Randbedingungen ist der Fachmann aus dem Gesagten problemlos in der Lage, eine günstige Kombination der Parameter f und C auszuwählen.

Abschließend sei noch erwähnt, dass die Auswahl der Spannungsanteile in V2 und V3 durch die Steuerung 1 aufgrund einer vorgefertigten Tabelle und/oder auf der Basis von Berechnungen erfolgen kann.

## Patentansprüche

1. Anordnung zur elektrischen Erregung einer elektrischen Maschine umfassend einen Rotor mit einem Rotorkörper (7), welcher wenigstens einen Rotorpol umfasst, und mit einer Welle (3), welche wenigstens zwei Schleifringe (4) umfasst, und wobei die Anordnung ferner eine Spannungsquelle (2), welche eine Gleichspannung zur Verfügung stellen kann, und eine Steuerung (1) umfasst, welche so ausgelegt und mit der Spannungsquelle verbunden ist, dass sie die Gleichspannung der Spannungsquelle (2) steuern kann, und wobei die Anordnung ferner wenigstens zwei Kontaktelemente (5) zum Kontaktieren der Schleifringe (4) und elektrische Leitungen (6) zur Verbindung der Schleifringe (4) mit dem wenigstens einen Rotorpol umfasst, und wobei die Spannungsquelle (2) so mit den Kontaktelementen (5) verbunden ist, und die elektrischen Leiter (6) so ausgebildet sind, dass ein Gleichstrom durch einen so gebildeten Erregerstromkreis fließen kann, um den wenigstens einen Rotopol zu erregen, **dadurch gekennzeichnet, dass** Spannungsquelle (2) eine Wechselspannung zur Verfügung stellen kann, welche der Gleichspannung der Spannungsquelle (2) überlagert ist, um die Abnutzung der Kontaktelemente (5) in Betriebsbedingungen mit geringer Stromdichte in den Kontaktelementen (5) durch eine zusätzliche Einspeisung eines dem Gleichstrom überlagerten Wechselstroms zu verringern, und die Steuerung (1) so ausgebildet und mit der Spannungsquelle (2) verbunden ist, dass sie die Wechselspannung derselben unabhängig von der Gleichspannung steuern kann, und die Anordnung ferner einen Kondensator (8) umfasst, welcher so in dem auf dem Rotor liegenden Teil des Erregerstromkreises angeordnet und so ausgelegt ist, dass er den wenigstens einen Rotorpol bezüglich des Wechselspannungsanteils der Spannungsquelle (2) als offenen Kreis wirken lassen kann, damit der Wechselstrom nicht durch den wenigstens einen Rotorpol fließt.

2. Verfahren zum Betrieb einer Anordnung zur elektrischen Erregung einer elektrischen Maschine umfassend einen Rotor mit einem Rotorkörper (7), welcher wenigstens einen Rotorpol umfasst, und mit einer Welle (3), welche wenigstens zwei Schleifringe (4) umfasst, und wobei die Anordnung ferner eine Spannungsquelle (2), welche eine Gleichspannung zur Verfügung stellen kann, und eine Steuerung (1) umfasst, welche so ausgelegt und mit der Spannungsquelle verbunden ist, dass sie die Gleichspannung der Spannungsquelle (2) steuern kann, und wobei die Anordnung ferner wenigstens zwei Kontaktelemente (5) zum Kontaktieren der Schleifringe (4) und elektrische Leitungen (6) zur Verbindung der Schleifringe (4) mit dem wenigstens einen Rotorpol umfasst, und wobei die Spannungsquelle (2) so mit den Kontaktelementen (5) verbunden ist, und die elektrischen Leiter (6) so ausgebildet sind, dass ein Gleichstrom durch einen so gebildeten Erregerstromkreis fließen kann, um den wenigstens einen Rotopol zu erregen, wobei die Spannungsquelle (2) eine Wechselspannung zur Verfügung stellen kann, welche der Gleichspannung der Spannungsquelle (2) überlagert ist, um die Abnutzung der Kontaktelemente (5) in Betriebsbedingungen mit geringer Stromdichte in den Kontaktelementen (5) durch eine zusätzliche Einspeisung eines dem Gleichstrom überlagerten Wechselstroms zu verringern, und die Steuerung (1) so ausgebildet und mit der Spannungsquelle (2) verbunden ist, dass sie die Wechselspannung derselben unabhängig von der Gleichspannung steuern kann, und die Anordnung ferner einen Kondensator (8) umfasst, welcher so in dem auf dem Rotor liegenden Teil des Erregerstromkreises angeordnet und so ausgelegt ist, dass er den wenigstens einen Rotorpol bezüglich des Wechselspannungsanteils der Spannungsquelle (2) als offenen Kreis wirken lassen kann, damit der Wechselstrom nicht durch den wenigstens einen Rotorpol fließt,
wobei das Verfahren die Verfahrensschritte in der angegebenen Reihenfolge umfasst:
V1: Festlegung des Betriebszustands für die elektrische Maschine;
V2: Auswahl des benötigten Gleichspannungsanteils;
V3: Auswahl des benötigten Wechselspannungsanteils;
V4: Ansteuerung der Spannungsquelle (2) gemäß den in V2 und V3 ausgewählten Spannungsanteilen;
wobei die Schritte V2 bis V3 von der Steuerung (1) ausgeführt werden, und wobei in Schritt V2 die Auswahl des benötigten Gleichspannungsanteils aufgrund der in Schritt V1 erfolgten Festlegung des Betriebszustandes erfolgt, und in Schritt V3 die Auswahl des benötigten Wechselspannungsanteils folgenden Kriterien entspricht: Wenn der in V2 ausgewählte Gleichspannungsanteil nicht ausreicht, die Gleichstromdichte in den Kontaktelementen (5) über einen vordefinierten Wert zu heben, welcher eine ausreichende Schmierwirkung der Kontaktelemente (5) auf den Schleifringen (4) gewährleistet, so wird ein solcher Wechselspannungsanteil ausgewählt, dass der Effektivwert der durch die Kontaktelemente fließenden Wechselstromdichte, welcher durch den ausgewählten Wechselspannungsanteil verursacht wird, wenigstens so groß ist wie die Abweichung der Gleichstromdichte von dem genannten vordefinierten Wert.

## Claims

1. Assembly for electrically exciting an electric machine comprising a rotor with a rotor body (7), which comprises at least one rotor pole, and with a shaft (3), which comprises at least two slip rings (4), and wherein the assembly further comprises a voltage source (2), which can deliver a DC voltage, and comprises a controller (1), which is designed and connected to the voltage source such that it can control the DC voltage of the voltage source (2), and wherein the assembly further comprises at least two contact elements (5) for the contact-connection of the slip rings (4) and electrical lines (6) for the connection of the slip rings (4) to the at least one rotor pole, and wherein the voltage source (2) is connected to the contact elements (5) and the electrical conductors (6) are configured such that a direct current can flow through a thus formed excitation current circuit in order to excite the at least one rotor pole, **characterized in that** the voltage source (2) can deliver an AC voltage, which is superimposed upon the DC voltage of the voltage source (2) in order to reduce the deterioration of the contact elements (5) in operating conditions with a low current density in the contact elements (5) by additionally feeding in an alternating current superimposed upon the direct current, and the controller (1) is configured and is connected to the voltage source (2) such that it can control the AC voltage of same independently of the DC voltage, and the assembly further comprises a capacitor (8), which is arranged in the part of the excitation current circuit located on the rotor and is designed such that it permits the at least one rotor pole, with respect to the AC voltage component of the voltage source (2), to function as an open circuit in order that the alternating current does not flow through the at least one rotor pole.

2. Method for operating an assembly for electrically exciting an electric machine comprising a rotor with a rotor body (7), which comprises at least one rotor pole, and with a shaft (3), which comprises at least two slip rings (4), and wherein the assembly further comprises a voltage source (2), which can deliver a DC voltage, and comprises a controller (1), which is designed and connected to the voltage source such that it can control the DC voltage of the voltage source (2), and wherein the assembly further comprises at least two contact elements (5) for the contact-connection of the slip rings (4) and electrical lines (6) for the connection of the slip rings (4) to the at least one rotor pole, and wherein the voltage source (2) is connected to the contact elements (5) and the electrical conductors (6) are configured such that a direct current can flow through a thus formed excitation current circuit in order to excite the at least one rotor pole, wherein the voltage source (2) can deliver an AC voltage, which is superimposed upon the DC voltage of the voltage source (2) in order to reduce the deterioration of the contact elements (5) in operating conditions with a low current density in the contact elements (5) by additionally feeding in an alternating current superimposed upon the direct current, and the controller (1) is configured and is connected to the voltage source (2) such that it can control the AC voltage of same independently of the DC voltage, and the assembly further comprises a capacitor (8), which is arranged in the part of the excitation current circuit located on the rotor and is designed such that it permits the at least one rotor pole, with respect to the AC voltage component of the voltage source (2), to function as an open circuit in order that the alternating current does not flow through the at least one rotor pole,
wherein the method comprises the following method steps in the sequence indicated:
VI: establishment of the operating state of the electric machine;
V2: selection of the required DC voltage component;
V3: selection of the required AC voltage component;
V4: actuation of the voltage source (2) in accordance with the voltage components selected in V2 and V3;
wherein steps V2 to V3 are executed by the controller (1) and wherein, in step V2, the selection of the required DC voltage component is executed on the basis of the establishment of the operating state executed in step V1 and, in step V3, the selection of the required AC voltage component corresponds to the following criteria: if the DC voltage component selected in V2 is not sufficient to raise the direct current density in the contact elements (5) above a predefined value that ensures an adequate lubricating effect of the contact elements (5) on the slip rings (4), an AC voltage component is selected such that the root mean square value of the alternating current density flowing through the contact elements and generated by the selected AC voltage component is at least as great as the deviation of the direct current density from the above-mentioned predefined value.

## Revendications

1. Ensemble destiné à l'excitation électrique d'une machine électrique comprenant un rotor pourvu d'un corps de rotor (7), qui comprend au moins un pôle de rotor, et d'un arbre (3) qui comprend au moins deux bagues collectrices (4), et l'ensemble comprenant en outre une source de tension (2), qui peut fournir une tension continue, et une commande (1) qui est conçue et reliée à la source de tension de manière à pouvoir commander la tension continue de la source de tension (2), et l'ensemble comprenant en outre au moins deux éléments de contact (5) destinés à venir en contact avec les bagues collectrices (4) et des lignes électriques (6) destinées à relier les bagues collectrices (4) à l'au moins un pôle de rotor, et la source de tension (2) étant reliée aux éléments de contact (5), et les conducteurs électriques (6) étant conçus pour qu'un courant continu puisse circuler à travers un circuit d'excitation ainsi formé afin d'exciter l'au moins un pôle de rotor, **caractérisé en ce que** la source de tension (2) peut fournir une tension alternative qui se superpose à la tension continue de la source de tension (2) afin de réduire l'usure des éléments de contact (5) dans des conditions de fonctionnement à faible densité de courant dans les éléments de contact (5) en injectant en plus un courant alternatif superposé au courant continu, et **en ce que** la commande (1) est conçue et reliée à la source de tension (2) de manière à pouvoir commander la tension alternative de celle-ci indépendamment de la tension continue, et **en ce que** l'ensemble comprend en outre un condensateur (8) qui est disposé dans la partie du circuit d'excitation qui est située sur le rotor et est conçu de manière à pouvoir influer sur l'au moins un pôle de rotor comme un circuit ouvert vis-à-vis de la composante de tension alternative de la source de tension (2) pour que le courant alternatif ne circule pas à travers l'au moins un pôle de rotor.

2. Procédé de fonctionnement d'un ensemble destiné à l'excitation électrique d'une machine électrique comprenant un rotor pourvu d'un corps de rotor (7), qui comprend au moins un pôle de rotor, et d'un arbre (3) qui comprend au moins deux bagues collectrices (4), et l'ensemble comprenant en outre une source de tension (2), qui peut fournir une tension continue, et une commande (1) qui est conçue et reliée à la source de tension de manière à pouvoir commander la tension continue de la source de tension (2), et l'ensemble comprenant en outre au moins deux éléments de contact (5) destinés à venir en contact avec les bagues collectrices (4) et des lignes électriques (6) destinées à relier les bagues collectrices (4) à l'au moins un pôle de rotor, et la source de tension (2) étant reliée aux éléments de contact (5), et les conducteurs électriques (6) étant conçus pour qu'un courant continu puisse circuler à travers un circuit d'excitation ainsi formé afin d'exciter l'au moins un pôle de rotor, la source de tension (2) pouvant fournir une tension alternative qui est superposée à la tension continue de la source de tension (2) afin de réduire l'usure des éléments de contact (5) dans des conditions de fonctionnement avec une faible densité de courant dans les éléments de contact (5) en injectant en plus un courant alternatif superposé au courant continu, et la commande (1) étant conçue et reliée à la source de tension (2) pour pouvoir commander la tension alternative de celle-ci indépendamment de la tension continue, et l'ensemble comprenant en outre un condensateur (8) qui est disposé dans la partie du circuit d'excitation qui est située sur le rotor et est conçu de manière à pouvoir influer sur l'au moins un pôle de rotor comme un circuit ouvert vis-à-vis de la composante de tension alternative de la source de tension (2) pour que le courant alternatif ne circule pas à travers l'au moins un pôle de rotor,
le procédé comprenant les étapes de procédé dans l'ordre indiqué :
V1 : définir l'état de fonctionnement de la machine électrique ;
V2 : sélectionner la composante de tension continue requise ;
V3 : sélectionner la composante de tension alternative requise ;
V4 : commander la source de tension (2) en fonction des composantes de tension sélectionnées en V2 et V3;
les étapes V2 à V3 étant réalisées par la commande (1), et
à l'étape V2, la composante de tension continue requise étant sélectionnée sur la base de la définition de l'état de fonctionnement effectuée à l'étape V1, et à l'étape V3, la sélection de la composante de tension alternative requise correspondant aux critères suivants : si la composante de tension continue sélectionnée en V2 n'est pas suffisante pour élever la densité de courant continu dans les éléments de contact (5) au-dessus d'une valeur prédéfinie qui garantit un effet lubrifiant suffisant des éléments de contact (5) sur les bagues collectrices (4), une telle composante de tension alternative est sélectionné de manière à ce que la valeur efficace de la densité de courant alternatif circulant à travers les éléments de contact, laquelle valeur est générée par la composante de tension alternative sélectionnée, soit au moins égale à l'écart de la densité de courant continu par rapport à ladite valeur prédéfinie.
